# EUROPEAN PATENT APPLICATION

(11) **EP 1 906 319 A1**
(43) Date of publication of application: **02.04.2008**
(21) Application number: 07116230.9
(22) Date of filing: 12.09.2007
(51) Int. Cl.: G06F 17/30

(54) **Database generation apparatus and database use aid apparatus**

(30) Priority: 29.09.2006 JP 2006266289
(71) Applicant: OMRON CORPORATION, Kyoto-shi, Kyoto 600-8530 (JP)
(72) Inventor: Yachiku, Hideki, c/o Omron Corporation, Kyoto-shi Kyoto 600-8530 (JP); Konishi, Hidefumi, c/o Omron Corporation, Shiokoji-dori, Shimogyo, Kyoto-shi Kyoto 600-8530 (JP); Abe, Masayoshi, c/o Omron Corporation, Kyoto-shi Kyoto 600-8530 (JP); Moriya, Toshihiro, c/o Omron Corporation, Kyoto-shi Kyoto 600-8530 (JP)
(74) Representative: Skuhra, Udo

(57) **Abstract**

A precedent database is generated by registering location indicating information that shows location of each of a plurality of precedent data. A knowledge database is generated by repeating processes of carrying out a search of this precedent database according to a specified search condition formula and registering knowledge names representing results of the search in correlation with the search condition formula. Component and failure names in the knowledge database are inserted as items of a generated FMEA sheet. Items of the FMEA sheet are specified and displayed such that corresponding text data can be referenced.

## Description

This application claims priority of Japanese Patent Application 2006-266289 filed September 29,2006.

### Background of the Invention

This invention relates to a database generation apparatus for generating a database and a database use aid apparatus for aiding in effectively making use of a generated database and more particularly to an apparatus adapted to aid in a product design or a process design.

As disclosed, for example, in Japanese Patent Publication Tokkai 2006-4219, Failure Modes and Effects Analysis (FMEA) is a methodology for analyzing potential reliability problems early in the development cycle by extracting problems related to product designs, etc. based on failure modes.

In FMEA, anticipated failure patterns are generally extracted, each failure pattern is classified according to the constituent elements of the product such as its components, a list (an FMEA sheet) is created to describe the phenomenon peculiar to the failure, as well as its effects, causes and countermeasures, such that if a failure occurs in the stage of the product development or production, this FMEA sheet can be referenced for addressing the problem quickly.

In FMEA, it is desirable to provide the designers with past examples, or precedents, of troubles that have occurred at the production site or complaints that have been made at the market. Most of such past examples of troubles, however, are accumulated in the form of documents such as written reports, and since these precedents are frequently of various different kinds, it is difficult as a practical matter to make an exhaustive search of necessary precedents in this large body of documentary data. For this reason, precedents of troubles that took place in the past cannot be fully utilized for the design of products and production processes and it is frequently the case that similar troubles are repeated over again.

### Summary of the Invention

It is therefore an object of this invention to make a large number of precedents effectively utilizable.

A database generation apparatus according to this invention is characterized as comprising precedent database generating means for generating a precedent database by registering location indicating information that indicates a location of each of a plurality of precedent data, knowledge database generating means for generating a knowledge database by repeatedly carrying out a search of the precedent database according to a specified search condition formula and registering a knowledge name representing results of the search in correlation with the search condition formula, input means for specifying a search condition formula, and display means for displaying contents of the precedent database and the knowledge database.

Preferable examples of the location indicating information may include file paths that indicate the locations of the files of the precedent database. The search condition formula may be specified preferably by inputting one or more keywords or a search condition that is a combination of keywords that are combined by a logical operator or formula. The knowledge name may be one that is inputted by the user but may also be the keyword used in the search.

The knowledge database is of a structure including a plurality of knowledge names and search condition formulas because it is generated by repeating the process of registering a knowledge name representing the result of a search in correlation with the search condition formula of the search.

The knowledge name is not only a name that represents the result of a search but also correlated to the search condition formula of the search and hence is a name corresponding to the search condition. Thus, the knowledge database has the precedents of the precedent database searched and classified according to the knowledge names. It is therefore preferable to select a knowledge name through which the user's classification of the precedents of the precedent database can be grasped.

According to an embodiment of this invention, the precedent database generating means extracts text data contained in the precedent data and registers the location indicating information and the text data in correlation.

According to another embodiment of the invention, the precedent data include at least one selected from the group consisting of documents and images related to past troubles, or those related to failures at the production site of the products, complaints on the products at the market, causes of such failures and complaints or the countermeasures against such failures and complaints.

According to still another embodiment of the invention, the search condition formula includes a keyword, the keyword being the name of one selected from the group consisting of components of a product, work processes for producing the product, failures corresponding to the components and failures corresponding to the work processes. Since the precedent database is searched by using as the keyword a component of the product, a production process for the product and the name of a corresponding failure, it is preferable to use such keywords as knowledge names.

According to an embodiment of the invention, the knowledge database generating means may be adapted to to correct the results of the search carried out according to a search condition formula and to register contents of the corrected results in correlation with the search condition formula.

According to another embodiment of the invention, the knowledge database generating means may be adapted to generate a knowledge database with a hierarchical structure by carrying out a further search on the results of the search represented by the knowledge name according to a specified search condition formula.

According to an embodiment of the invention, the knowledge database may include frequency data of a precedent matching the search condition formula and the display means may display the frequency data numerically or graphically based on the frequency data.

A database use aid apparatus according to this invention is characterized as comprising a precedent database that stores location indicating information that indicates a location of each of a plurality of precedent data, a knowledge database that stores a plurality of knowledge names representing results of searches carried out according to specified search condition formulas in correlation with the search condition formulas corresponding individually to the results of the searches, display means for displaying contents of the precedent database and the knowledge database, input means for specifying knowledge names of the knowledge database displayed on the display means, and search processing means for carrying out a search of the precedent database according to the search condition formula corresponding to one of the knowledge names of the knowledge database specified by the input means and causing results of the search to be displayed on the display means.

According to an embodiment of this invention, the precedent database stores text data contained in the precedent data in correlation with the location indicating information. According to another embodiment of the invention, the precedent data include at least one selected from the group consisting of documents and images related to past troubles. According to still another embodiment of the invention, the precedent database stores records that include items corresponding to the location indicating information for each of the precedent data, the knowledge database stores records that include items corresponding to the knowledge names, and the search processing means causes the display means to display the results of the search as a list of the records of corresponding ones of the precedent data. Moreover, search processing means carries out the search of the precedent database based on the location indicating information showing the location of a record of the list displayed on the display means and specified by the input means and causes the display means to display the contents of corresponding precedent data.

A keyword may be used as a condition of the search condition formula, and the keyword may be the name of one selected from the group consisting of components of a product, work processes for producing the product, failures corresponding to the components and failures corresponding to the work processes. The record of the knowledge database may contain at least an item corresponding to the knowledge name selected from the group consisting of items of components of a product, items of work processes for producing the product, items of failures corresponding to the components and items of failures corresponding to the work processes.

The database use aid apparatus may further comprise FMEA sheet generating means for generating an FMEA sheet that includes records with items and is adapted to retrieve component and failure items of the record of said knowledge database, to insert the reprieved components as items of the FMEA sheet and to cause the FMEA sheet to be displayed on the display means, the input means serving to specify items of the FMEA sheet and the search processing means serving to carry out a search of the precedent database according to a search condition formula corresponding to an item of the FMEA sheet specified by the input means and to cause results of the search displayed on the display means. In the above, the display means may serve to display the results of the search as a list of records containing an item of the location indicating information, the input means may serve to specify records of the list displayed on the display means, and the search processing means may serve to search precedent data corresponding to a record specified by the input means and to cause contents of the searched precedent data to be displayed on the display means.

According to an embodiment of this invention, the knowledge database may store contents of corrections on search results on the precedent database carried out according to the search condition formula in correlation with the search condition formula, and the search processing means may correct and display on the display means the search results on the precedent database according to the search condition formula corresponding to the knowledge name according to the contents of corrections.

According to another embodiment of the invention, the knowledge database may be of a hierarchical structure, a further search being carried out according to the specified search condition formula on the search results represented by the knowledge name.

According to still another embodiment of the invention, the knowledge database may include frequency data of a precedent matching the search condition formula, and the display means may display the frequency data numerically or graphically based on the frequency data.

### Brief Description of the Drawings

Fig. 1 is a schematic diagram showing the structure of a system provided with a database use aid apparatus embodying this invention.
Fig. 2 is a flowchart showing the routine for generating the precedent database.
Fig. 3 is a drawing of an example of display screen showing the content of the precedent database.
Fig. 4 is a flowchart showing the routine for generating the knowledge database.
Fig. 5 is a drawing of an example of display screen showing the result of a search by using "connector" as keyword.
Fig. 6 is a drawing of another example of display screen showing the content of the precedent database.
Fig. 7 is a drawing of an example of display screen showing the content of the precedent database after a search by component name and failure name.
Fig. 8 is a drawing of an example of the display screen showing the content of the knowledge database.
Fig. 9 is a drawing of an example of display screen showing the result of a search by using knowledge name.
Fig. 10 is a flowchart showing the routine for generating an FMEA sheet.
Fig. 11 is a drawing of an example of display screen of an FMEA sheet.
Fig. 12 is a schematic drawing showing the data flow leading to the generation of an FMEA sheet.

### Detailed Description of the Invention

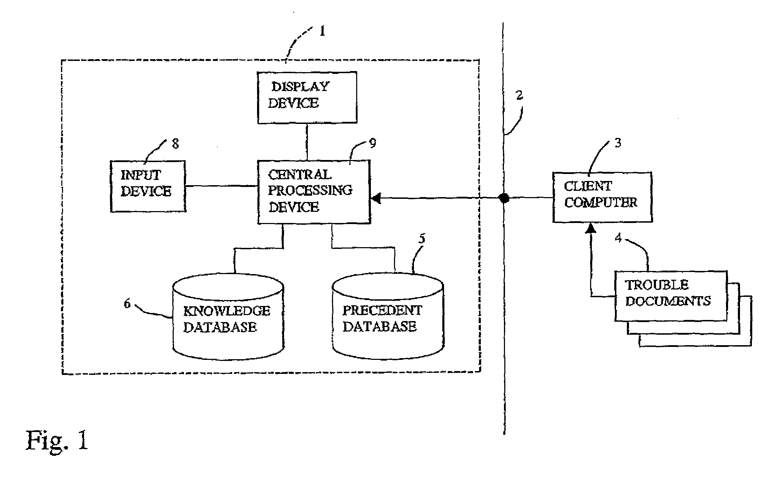

Embodiments of the invention are described next with reference to drawings. Fig. 1 is a schematic diagram showing the structure of a system provided with a database use aid apparatus embodying this invention, comprising a server computer 1 serving as a database use aid apparatus and a client computer 3 connected to this server computer 1 through a network 2 such as a LAN.

The client computer 3 is adapted to receive a large number of trouble documents 4 (that is, problem reports) inclusive of documents related to troubles such as the past failures at a production site, complaints at the market, their causes and countermeasures as well as images, to store them as precedent data on a hard disk, etc. and to transmit them to the server computer 1 through the network 2.

The server computer 1 is provided not only with a precedent database 5 and a knowledge database 6 generated on the basis of precedent data received from the client computer 3 as will be described below but also with a display device 7 such as a liquid crystal display, an input device 8 such as a keyboard and a mouse, and a central processing device 9 formed with a CPU having an internal memory, and may, for example, be comprised of a personal computer.

According to the illustrated embodiment, the server computer 1 has not only the function of a database generating apparatus for generating the precedent database 5 and the knowledge database 6 as will be described below but also the function of a database use aid apparatus for aiding the use of the precedent database 5 and the knowledge database 6 which have been generated, in particular aiding the generation of an FMEA sheet in the case of FMEA used for designing products and production processes.

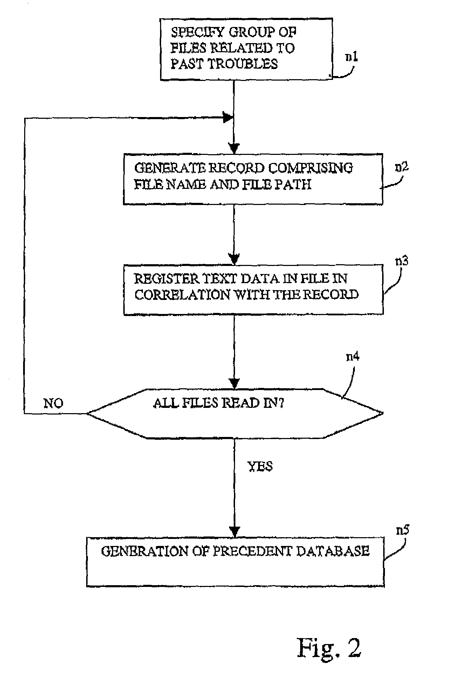

According to this embodiment, the server computer 1 is adapted firstly to generate the precedent database 5 by a procedure shown in Fig. 2 for referencing many of the precedents of troubles to generate an FMEA sheet to be described below,

As shown now in Fig. 2, a folder of the client computer 3 containing files into which trouble documents 4 inclusive of documents and images related to troubles such as past failures generated in arbitrary forms or with arbitrary applications, complaints, their causes and countermeasures are taken in is specified (Step n1).

Next, the data in the specified folder are received and read in, the file name, the file path for showing the location of the file and the text data are extracted and a record comprising the file name and the file path (link) is generated (Step n2), and the extracted text data and their record are registered in the database by being correlated together (Step n3).

It is then judged whether or not all files have been read in (Step n4). If it has not been completed (NO in Step n4), the process returns to Step n2. If it is judged to have been completed (YES in Step n4), it means that the precedent database 5 has been completed (Step n5).

In summary, the precedent database 5 is generated as the precedent data related to a large number of past troubles come to be stored as records comprised of file names and file paths for each of the precedent data and the text data extracted from the precedent data are stored individually in correlation with the records.

Precedent data other than the text data, such as the images, may also be stored in the precedent database 5 or may be stored in an external memory device of the server computer 1.

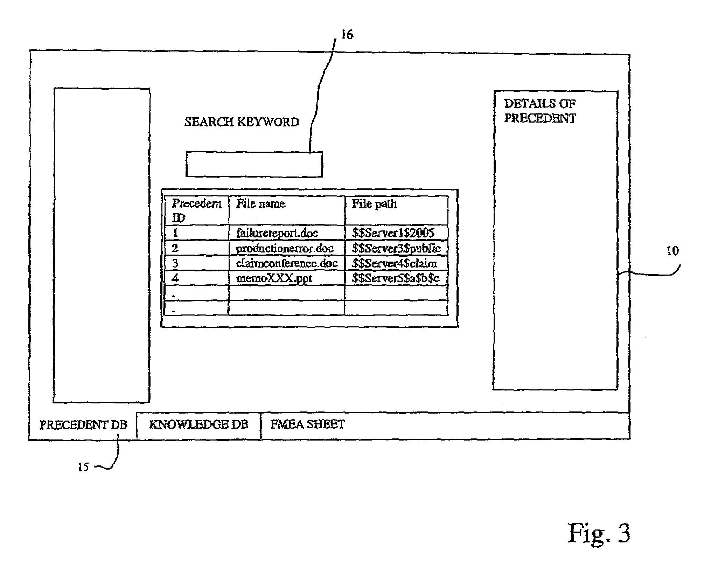

Fig. 3 is an example of a display screen on the display device 7 showing the content of the generated precedent database 5. The display is made by specifying a precedent data tab 15 at the bottom of the screen.

As shown in Fig. 3, a precedent ID for identification is assigned to each of the precedent data, and a list of records comprising file names such as "malfunction" and file paths for indicating their locations is displayed.

If the input device 8 is operated to specify a precedent ID on this display screen, the content of the text data correlated to the record of the specified precedent ID, that is the original document of that precedent, is displayed, for example, in a window 10 on the right-hand side such that the details of this precedent can be referenced.

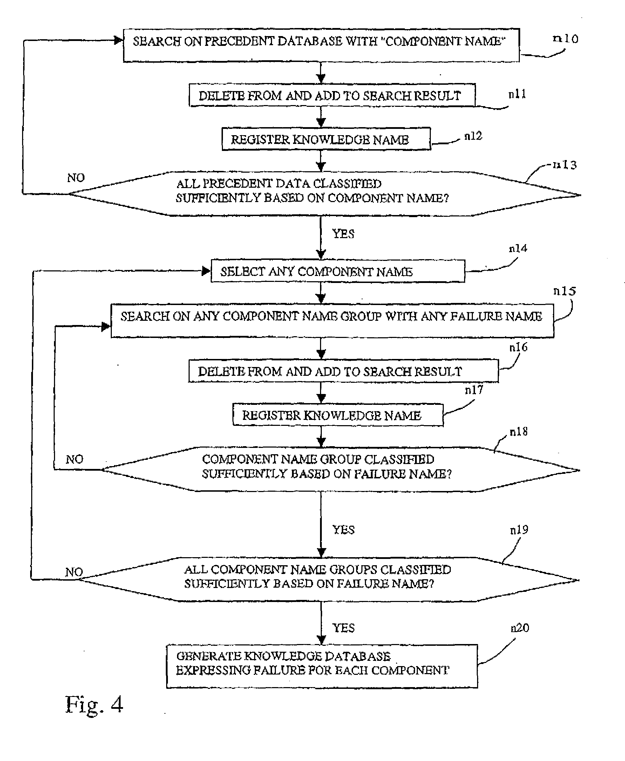

Next, the server computer 1 generates the knowledge database 6 based on the precedent database 5 by the procedure shown in Fig. 4.

According to the present embodiment, searches are done sequentially by using "componentname" and "failurename" corresponding to the component and the failure mode which are items in the FMEA to be described below for generating the knowledge database 6 for aiding the generation of the FMEA sheet.

Firstly, a search is carried out on the precedent database 5 by specifying "componentname" (Step n10). This may be done, for example, by inputting "connector" as a component name in a search keyword window 16 shown near the top of the display screen shown in Fig. 3.

In this situation, keywords for search may be expanded by any method such as by carrying out an ordinary full-text search on the text data of the precedent database 5 by using specified keywords such as "connector", by carrying out a full-text search by using a dictionary prepared in advance to add synonyms of specified keywords or by determining words that are co-occurring within a specified section for words used within all text data that have been read in, repeating this sequentially onto the co-occurring words and adding those exceeding a specified threshold as keyword such that a more comprehensive search can be possible. If necessary, it may be selectively determined whether a search should be done directly by using the inputted keyword or the keyword should be expanded.

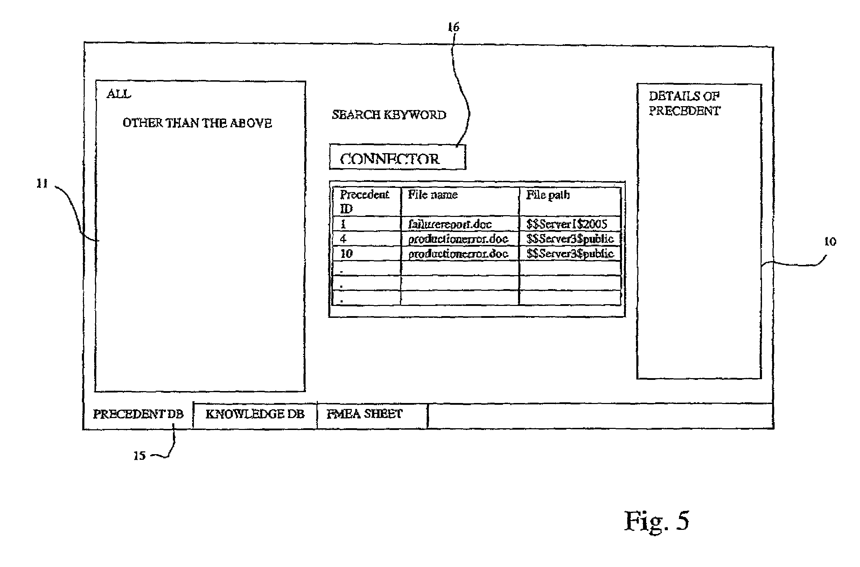

Fig. 5 shows an example of a display of a list resulting from a search by using component name "connector", showing a list of record including precedent IDs, file names and file paths.

Of the multiple past precedent data registered in the precedent database 5, this search result shows a list of those that include keyword "connector" in the text data.

If the user operates the input device 8 to specify a desired record of this list, the text data corresponding to the precedent data of the specified record are read out and displayed in the window 10 on the right-hand side.

In a window 11 on the left-hand side, classifications according to the search keyword are displayed stepwise as will be explained below, and the precedent data not extracted are classified as "other than above". If the input device 8 is operated to specify "other than above" in the left-hand window 11, a list of precedent data classified as "other than above" can be displayed at the center of the display screen instead of the list of precedent data classified by "connector".

Since the text data corresponding to the precedent of a specified record can be displayed and their content can be referenced by specifying the list record of the precedent data, if an unnecessary record not very much related to "connector" is extracted, for example, this may be deleted and classified as "other than above" by operating the input device 8, and if necessary precedent data related to "connector" are found in the precedent data classified as "other than above", this may be added into the list of the precedent data of "connector" by operating the input device 8 (Step n11).

Next, the search condition formula for the search, the details of the corrections such as deletions and additions and the frequency indicative of the number of precedent data matching the search condition formula for the search are registered by adding a knowledge name that refers to all of these and represents the search result (Step n12).

In the search condition formula, the keyword for the search or a combination of keywords and a logical operator or formula becomes the condition.

As for the knowledge name, the keyword for the search such as "connector" automatically becomes assigned as the knowledge name unless the input device 8 is operated to make a specific input,

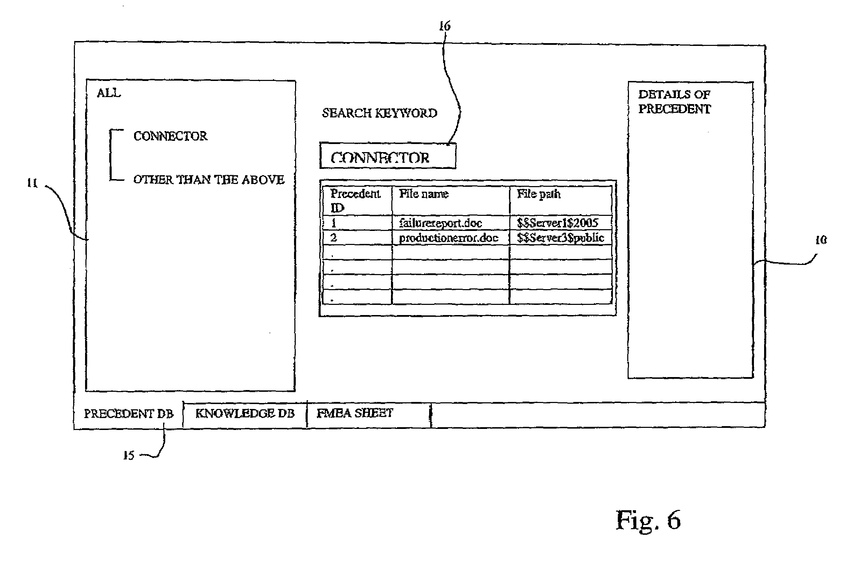

Fig. 6 is an example of a display screen of the precedent database 5 when a search with the keyword "connector" has ended. The left-hand window I 1 is shown as displaying that precedent data of the precedent database 5 are classified into "connector" and "other than above".

Next, it is determined against all precedent data whether or not classifications have been made sufficiently based on component names (Step n13). If classifications have not been sufficiently made (NO in Step n13), the process returns to Step n10 and a search is carried out with another component name such as "IC" and a similar process is repeated.

If the process described above is repeated for all components, the precedent database 5 comes to be classified, say, by component names "connector" and "IC".

It is also possible to reference the precedent data classified under the heading of "other than above" that finally remains, and to classify them into any of the component names.

If it is judged in Step n13 that the classification according to the component names has been carried out to a sufficient degree (YES in Step n13), a group of any of the "component names" such as the group of "connector" is selected (Step n14), and a search is carried out for this group with putative (tentative) "failure names" such as "improper diameter" (Step n15). In this manner, similarly to the situation with the component name described above, a search is carried out on the group extracted by the search with the component name "connector" using the failure name "improper diameter".

In the list of records of a search result, as in the case of the component name, each record may be specified to reference the corresponding text data. If an unrelated record is extracted, it is deleted as in the case of the component name described above. If the search results are insufficient, additions can be made in a similar manner (Step n16).

Next, the search condition formula for the search, the details of corrections such as deletions and additions and the frequency indicative of the number of precedent data matching the search condition formula for the search are registered by adding a knowledge name that refers to all of these and represents the search result (Step n17).

As explained above, unless the input device 8 is operated to make a specific input, the keyword for the search such as "improper diameter" is automatically assigned as the knowledge name.

Next, it is judged whether the component name group under consideration has been sufficiently classified based on failure names (Step n18), If it is determined that classification has not been made sufficiently (NO in Step n18), the procedure returns to Step n15 and the search is carried out in a similar manner with another failure name such as "short" (for short circuit).

If it is determined that classification has been carried out sufficiently for the component name group under consideration (YES in Step n18) (or, for example, if it is judged that the connector group has been classified sufficiently according to putative failure names), the procedure proceeds to Step n19 and it is judged whether each of all groups with all component names has been sufficiently classified by failure names. If it is judged not to have been sufficiently classified (NO in Step n19), the procedure returns to Step n14 and a group with another component name such as a group with component name "IC" is selected and this selected group for "IC" is classified by putative failure names such as "voltage drop", "signal error" and "unstable output" as done in the case of "connector" described above.

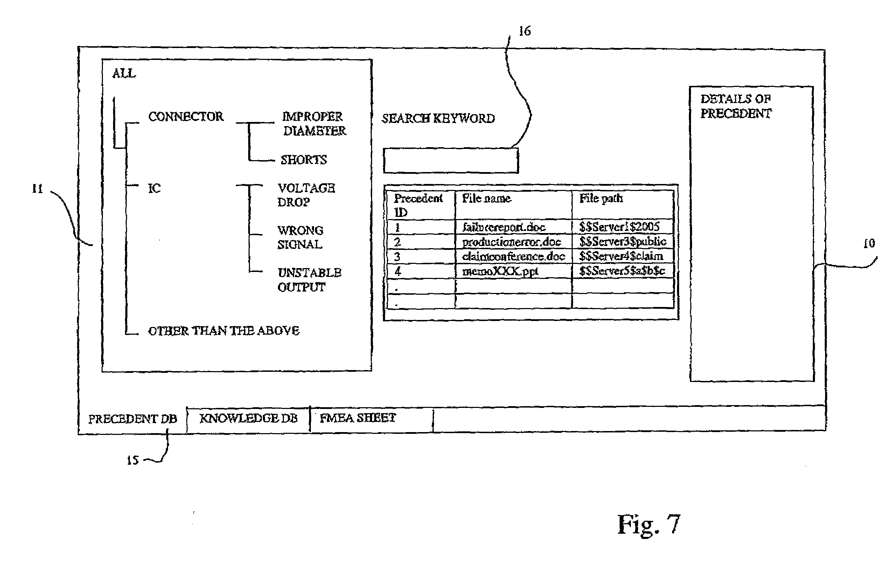

Fig. 7 is an example of a display screen of the precedent database after a search on the group of IC by failure names has ended, descriptions of the other components being omitted. The left-hand window 11 shows the precedent data of the precedent database 5 classified by component names "connector" and "IC", the group of "connector" being classified by failure names "improper diameter" and "short" and the group of "IC" being similarly classified by failure names "voltage drop", "wrong signal" and "unstable output". It can thus be seen that the knowledge database 6 has a stepwise (hierarchical) structure,

The knowledge database 6, which shows failures for each component, is thus generated by repeating the processes described above on each component group by each failure name so as to thereby classify the precedent database 5 by the component and failure names (Step n20).

Classification of the precedent database 5, however, need not be carried out by the component names and the failure names of the components. It also may be done by using names of the production steps such as assembly and soldering.

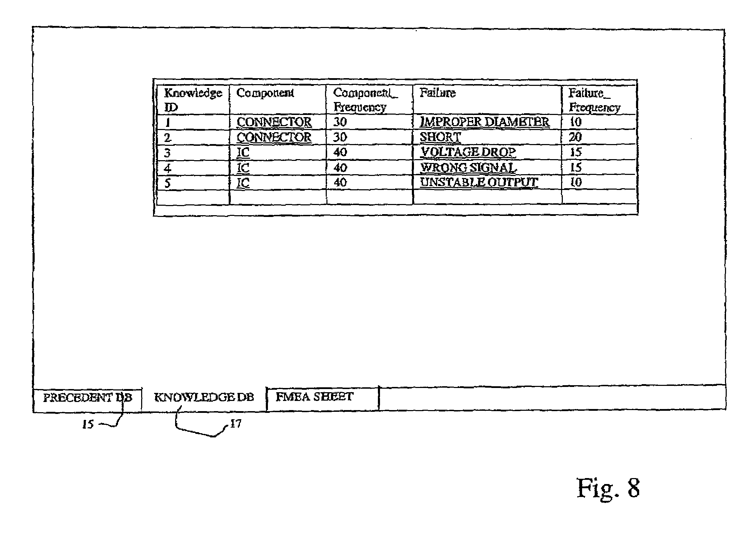

Fig. 8 shows an example of the display screen of the knowledge database 6 that is displayed if the tab 17 at the bottom of the screen for the knowledge database 6 is specified, its record being structured with items such as knowledge ID, component, component frequency, failure and failure frequency.

It can be ascertained from the list of this knowledge database, for example, that there are 30 precedent data items related to the component "connector" and that 10 of these items relate to the failure "improper diameter". It goes without saying that frequencies also may be displayed in the form of a graph.

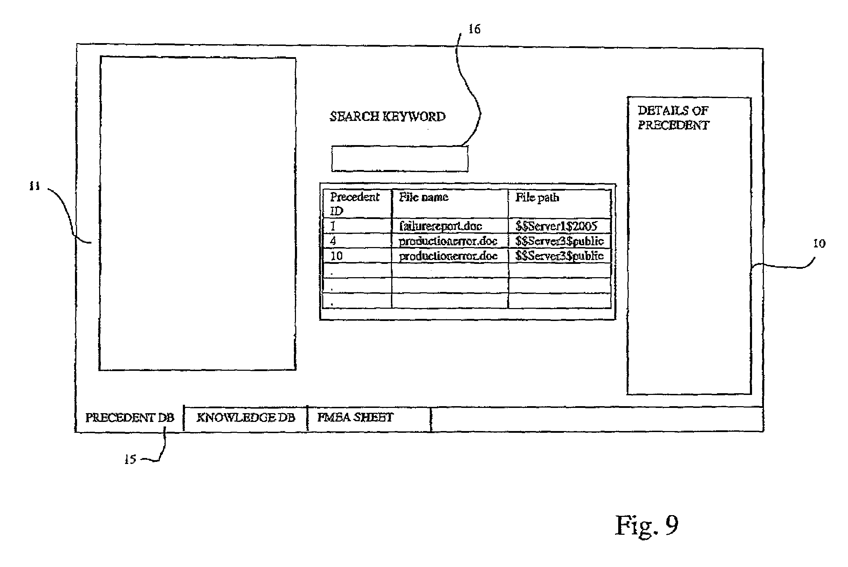

The items of components and failures in the list of this knowledge database 6 correspond to the knowledge IDs as explained above. Thus, a search on the precedent database 5 is carried out by a search condition formula corresponding to the knowledge name "connector", for example, if component "connector" is specified. Corrections such as deletions and additions are reflected by the search result, and a list of corresponding precedent data is displayed as shown in Fig. 9.

If a record in this list of precedent data is specified, the corresponding text data are displayed in the right-hand window 10 such that details of the precedent data can be obtained.

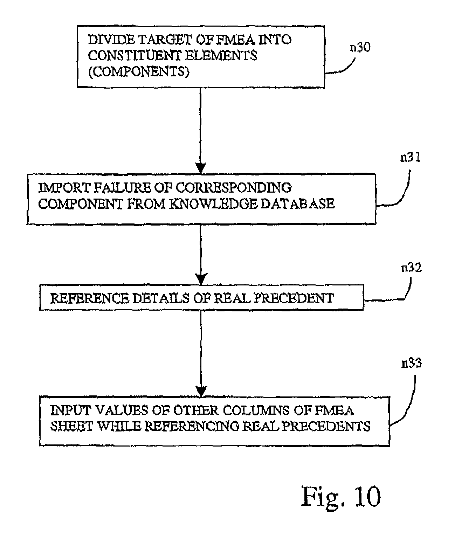

The server computer 1 according to this embodiment is adapted to aid the generation of an FMEA sheet. The routine for this generation is explained next with reference to the flowchart of Fig. 10.

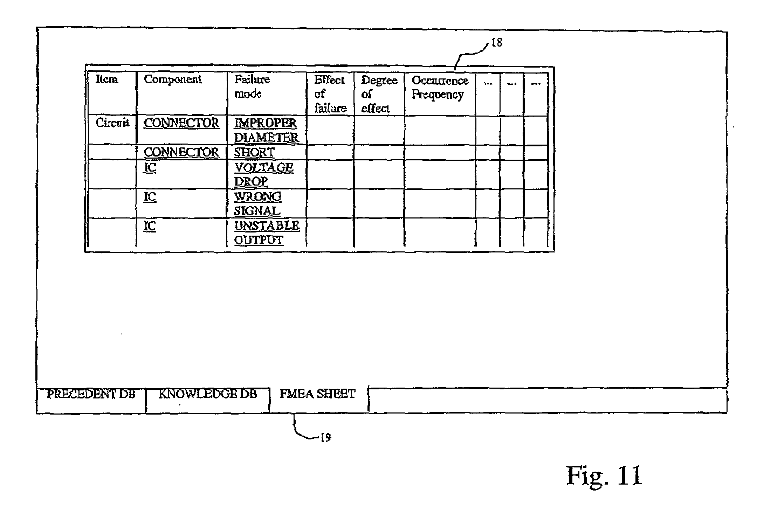

Firstly, the target product is divided into components which are its constituent elements (Step n30) and failure data of a corresponding component are imported from the knowledge data and inserted into the space for component and failure mode on the FMEA sheet 18 shown in the example of display screen of Fig. 11 (Step n31). This FMEA sheet 18 is displayed when the FMEA sheet tab 19 at the bottom of the screen is specified.

As the user specifies an imported failure mode such as "improper diameter" related to the connector, not only is a search carried out on the precedent database 5 by the search condition formula corresponding to the knowledge name "improper diameter" but also corrections including deletions and additions are carried out on the search result and a list of corresponding precedent data is displayed.

As this record of the list of precedent data is specified, corresponding text data are displayed in the right-hand window 10 such that the details of the real precedents can be referenced (Step n32). Thus, it is possible to investigate the effects of the component failures, the degrees of failure and the details of countermeasures.

Next, the user inputs the values in other columns of the FMEA sheet, etc, while referencing real precedents (Step n33). Thus, since the designer (who is the user) can input the values of columns of the FMEA sheet, etc, while referencing the precedents of failures that actually occurred in the past, the work of generating the FMEA, which used to be done based on the experience and the know-how of the designer, can now be carried out objectively, based on comprehensively extracted real precedents. This is far more effective for preventing the recurrence of malfunctions.

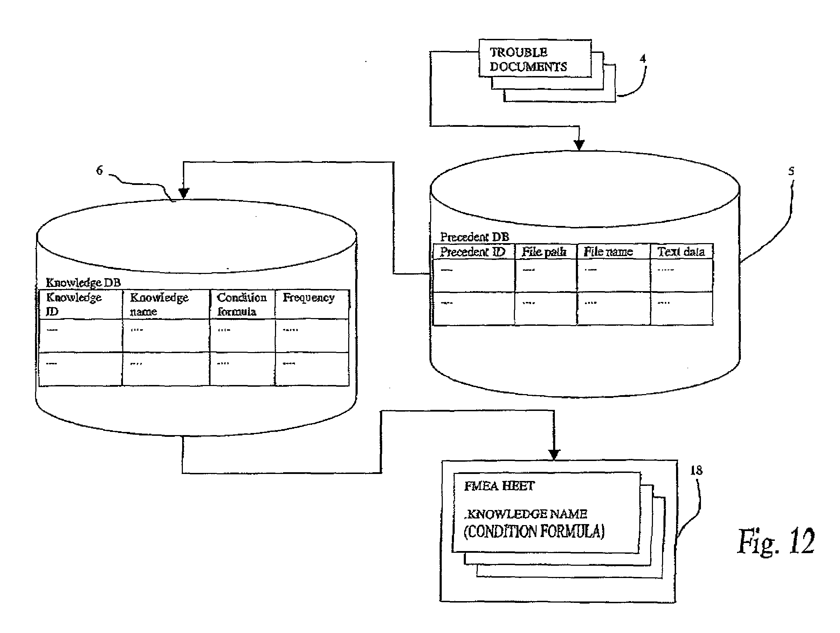

Fig. 12 is a schematic drawing showing the data flow leading to the generation of an FMEA sheet as explained above. As schematically shown, the precedent database 5 is generated by storing a large number of precedent data obtained by reading in documents 4 related to past troubles. This is done by attaching precedent IDs for each of the precedent data in correlation with file paths showing the locations relating to the files of the precedent data, file names and text data extracted from the precedent data.

From this precedent database 5, the knowledge database 6 is generated by carrying out searches by using component names and failure names to thereby hierarchically classify the precedent data of the precedent database 5 and storing the condition formulas of these searches, frequencies and knowledge names by correlating them and attaching knowledge IDs.

Further, the knowledge IDs corresponding to the component and failure names in the knowledge database 8 are taken onto the FMEA sheets 18. As the component and failure names thus taken on are specified, the precedent database 5 is searched according to the search condition formula of the corresponding knowledge name such that the results of these searches can be referenced. If precedent data of the search results are specified, the text data of the corresponding precedent are searched and can be referenced. Thus, the FMEA sheets 18 can be generated by referencing those of the precedent data necessary for the generation of the FMEA sheets 18 from the precedents related to the past troubles.

Although an embodiment of the invention has been described above according to which precedent data of the documents 4 related to troubles are taken in from the client computer 3 through the network, this is not intended to limit the scope of the invention. As another embodiment of the invention, the server computer 1 may be adapted to directly take in precedent data of the documents 4 related to troubles.

This invention is effectively applicable to product and procedure designs.

## Claims

1. A database generation apparatus comprising:
precedent database generating means for generating a precedent database by registering location indicating information that indicates a location of each of a plurality of precedent data;
knowledge database generating means for generating a knowledge database by repeatedly carrying out a search of said precedent database according to a specified search condition formula and registering a knowledge name representing results of said search in correlation with said search condition formula;
input means for specifying said search condition formula; and
display means for displaying contents of said precedent database and said knowledge database.

2. The database generation apparatus of claim 1 wherein said precedent database generating means extracts text data contained in said precedent data and registers said location indicating information and said text data in correlation.

3. The database generation apparatus of claim 1 or 2 wherein said precedent data include at least one selected from the group consisting of documents and images related to past troubles.

4. The database generation apparatus of any of claims 1 to 3 wherein said search condition formula includes a keyword, said keyword being the name of one selected from the group consisting of components of a product, work processes for producing said product, failures corresponding to said components and failures corresponding to said work processes.

5. The database generation apparatus of any of claims 1 to 4 wherein said knowledge database generating means is adapted to correct the results of said search carried out according to said search condition formula and to register contents of the corrected results in correlation with said search condition formula.

6. The database generation apparatus of any of claims 1 to 5 wherein said knowledge database generating means is adapted to generate a knowledge database with a hierarchical
structure by carrying out a further search on the results of said search represented by the knowledge name according to said specified search condition formula.

7. The database generation apparatus of any of claims 1 to 6 wherein said knowledge database includes frequency data of a precedent matching said search condition formula; and
wherein said display means displays said frequency data numerically or graphically based on said frequency data.

8. A database use aid apparatus comprising:
a precedent database that stores location indicating information that indicates a location of each of a plurality of precedent data;
a knowledge database that stores a plurality of knowledge names representing results of searches carries out according to specified search condition formulas in correlation with said search condition formulas corresponding individually to said results of said searches;
display means for displaying contents of said precedent database and said knowledge database;
input means for specifying said knowledge names of said knowledge database displayed on said display means; and
search processing means for carrying out a search of said precedent database according to the search condition formula corresponding to one of said knowledge names of said knowledge database specified by said input means and causing results of said search to be displayed on said display means.

9. The database use aid apparatus of claim 8 wherein said precedent database stores text data contained in said precedent data in correlation with said location indicating information.

10. The database use aid apparatus of claim 8 or 9 wherein said precedent data include at least one selected from the group consisting of documents and images related to past troubles.

11. The database use aid apparatus of any of claims 8 to 10 wherein said precedent database stores records that include items corresponding to said location indicating information for each of said precedent data;
wherein said knowledge database stores records that include items corresponding to said knowledge names; and
wherein said search processing means causes said display means to display said results of said search as a list of the records of corresponding precedent data.

12. The database use aid apparatus of any of claims 8 to 11 wherein said search processing means carries out said search of said precedent database based on the location indicating information showing the location of a record of said list displayed on said display means and specified by said input means and causes said display means to display the contents of corresponding precedent data.

13. The database use aid apparatus of any of claims 8 to 12 wherein said search condition formula includes a keyword, said keyword being the name of one selected from the group consisting of components of a product, work processes for producing said product, failures corresponding to said components and failures corresponding to said work processes; and
wherein the record of said knowledge database contains at least an item corresponding to said knowledge name selected from the group consisting of items of components of a product, items of work processes for producing said product, items of failures corresponding to said components and items of failures corresponding to said work processes.

14. The database use aid apparatus of any of claims 8 to 13 wherein said knowledge database stores contents of corrections on search results on said precedent database carried out according to said search condition formula in correlation with said search condition formula; and
wherein said search processing means corrects and displays on said display means the search results on said precedent database according to the search condition formula corresponding to said knowledge name according to said contents of corrections.

15. The database use aid apparatus of any of claims 8 to 14 wherein said knowledge database is of a hierarchical structure, a further search being carried out according to said specified search condition formula on the search results represented by said knowledge name.

16. The database use aid apparatus of any of claims 8 to 15 wherein said knowledge database includes frequency data of a precedent matching said search condition formula; and
wherein said display means displays said frequency data numerically or graphically based on said frequency data.

17. The database use aid apparatus of any of claims 8 to 16 further comprising FMEA sheet generating means for generating an FMEA sheet that includes records with items and is adapted to retrieve component and failure items of the record of said knowledge database, to insert the reprieved component as items of said FMEA sheet and to cause said FMEA sheet to be displayed on said display means;
wherein said input means is adapted to specify items of said FMEA sheet; and
wherein said search processing means is adapted to carry out a search of said precedent database according to a search condition formula corresponding to an item of said FMEA sheet specified by said input means and to cause results of said search displayed on said display means.

18. The database use aid apparatus of any of claims 8 to 17 wherein said display means is adapted to display said results of said search as a list of records containing an item of said location indicating information;
wherein said input means is adapted to specify records of said list displayed on said display means; and
wherein said search processing means is adapted to search precedent data corresponding to a record specified by said input means and to cause contents of said searched precedent data on said display means.
